# EUROPÄISCHE PATENTSCHRIFT

(11) **EP 2 159 653 B1**
(45) Veröffentlichungstag und Bekanntmachung des Hinweises auf die Patenterteilung: **23.07.2014**
(21) Anmeldenummer: 08015433.9
(22) Anmeldetag: 02.09.2008
(51) Int. Cl.: G05B 19/406, G05B 19/418, G06F 21/00, H04L 29/06

(54) **Verfahren zur Einräumung einer Zugriffsberechtigung auf ein rechnerbasiertes Objekt in einem Automatisierungssystem, Computerprogramm und Automatisierungssystem**
Method for assigning access authorisation to a computer-based object in an automation system, computer program and automation system
Procédé de concession d'une justification d'accès sur un objet informatique dans un système d'automatisation, programme informatique et système d'automatisation

(43) Veröffentlichungstag der Anmeldung: 03.03.2010
(73) Patentinhaber: Siemens Aktiengesellschaft, 80333 München (DE)
(72) Erfinder: Herberth, Harald, 90522 Oberasbach (DE); Kröger, Ulrich, 67657 Kaiserslautern (DE); Sobihard, Allan, 84104 Bratislava (SK)

(56) Entgegenhaltungen:
- EP-A- 1 496 664
- EP-A- 1 621 944
- EP-A- 1 624 350
- EP-A- 1 696 378
- WO-A-2008/022606
- DE-A1- 10 200 681
- US-A1- 2005 287 990

## Beschreibung

Aufgrund einer ständig steigenden Bedeutung von Informationstechnik für Automatisierungssysteme gewinnen Verfahren zur Sicherung von vernetzten Systemkomponenten wie Überwachungs-, Steuerungs- und Regelungseinrichtungen, Sensoren und Aktoren gegenüber unberechtigtem Zugriff verstärkt an Bedeutung. Im Vergleich zu anderen Anwendungsgebieten der Informationstechnik kommt Datenintegrität in der Automatisierungstechnik eine besonders hohe Bedeutung zu. Insbesondere bei einer Erfassung, Auswertung und Übermittlung von Meß- und Steuerungsdaten ist sicherzustellen, daß vollständige und unveränderte Daten vorliegen. Absichtliche, unabsichtliche oder durch einen technischen Fehler bedingte Veränderungen sind zu vermeiden. Besondere Anforderungen in der Automatisierungstechnik für sicherheitstechnische Verfahren resultieren außerdem aus einem Meldungsverkehr mit verhältnismäßig vielen, aber relativ kurzen Nachrichten. Daneben ist einer Echtzeitfähigkeit eines Automatisierungssystems und seiner Systemkomponenten Rechnung zu tragen.

Insbesondere in Automatisierungssystemen, die auf dienstorientierten Architekturen basieren, sind häufig sehr differenzierte Sicherheits- und Zugriffsrichtlinien für dort bereitgestellte Dienste anzuwenden. Dabei sind Sicherheits- und Zugriffslinien nicht nur in bezug auf Benutzer anzuwenden, sondern auch auf Dienste, die auf andere Dienste zurückgreifen. Daher kommt einer Software-Authentifizierung in derartigen Anwendungsgebieten eine große Bedeutung zu. Insbesondere bestehen dabei Anforderungen hinsichtlich einer schnellen und effektiven Identifizierung und Zugriffsrechteinräumung für eine Vielzahl von Software-Modulen. Bisherige Lösungen zielen auf eine explizite Implementierung von Software-Authentifizierungsverfahren ab. Dies hat den Nachteil, daß entsprechende Authentifizierungsverfahren fest in Software-Module zu integrieren sind, die entweder Zugriff auf zu schützende Ressourcen anfordern oder diese bereitstellen. Alternative bisherige Lösungsansätze sehen vor, Authentifizierungsverfahren implementierende Software-Module statisch oder dynamisch mit den zu schützende Ressourcen anfordernden oder bereitstellenden Software-Modulen zu binden. Erfolgt ein Binden dynamisch, besteht zumindest eine Möglichkeit, dies durch Konfiguration zu steuern.

Aus EP 1 624 350 A1 ist ein Verfahren zur Authentifizierung eines Anwenders beim Zugriff auf ein Automatisierungsgerät in einem Automatisierungssystem bekannt, bei dem ein Single Sign-On-Authentifizierungsverfahren für ein Automatisierungssystem vorgesehen ist. Ein Anwender wird dadurch in die Lage versetzt, sich mit einer einzigen Authentifizierung an sämtlichen Automatisierungsgeräten innerhalb eines Automatisierungsprojektes gleichzeitig anzumelden. Das Single Sign-On-Verfahren wird zentral projektiert. Zur Authentifizierung eines Anwenders bei einem Anwenderzugriff auf ein Automatisierungsgerät wird zunächst durch das Automatisierungsgerät geprüft, ob der Anwender über ein Ticket verfügt. Wenn der Anwender über kein Ticket verfügt, wird der Anwender durch einen Ticket-Agenten anhand einer Anwender-Datenbasis authentifiziert. Bei erfolgreicher Authentifizierung erzeugt der Ticket-Agent ein Ticket für den Zugriff auf das Automatisierungsgerät und leitet den Anwenderzugriff an das Automatisierungsgerät weiter. Wenn der Anwender über ein Ticket verfügt, wird das Ticket durch das Automatisierungsgerät validiert.

Bei positivem Validierungsergebnis wird der Anwenderzugriff eingeräumt.

Der vorliegenden Erfindung liegt die Aufgabe zugrunde, ein schnelles und effektives Verfahren zur Einräumung einer Zugriffsberechtigung auf ein rechnerbasiertes Objekt in einem Automatisierungssystem zu schaffen, sowie eine geeignete technische Realisierung des Verfahrens anzugeben.

Diese Aufgabe wird erfindungsgemäß durch ein Verfahren mit den in Anspruch 1 angegebenen Merkmalen und durch ein Computerprogramm mit den in Anspruch 9 angegebenen Merkmalen gelöst. Vorteilhafte Weiterbildungen der vorliegenden Erfindung sind in den abhängigen Ansprüchen angegeben.

Erfindungsgemäß wird zur Einräumung einer Zugriffsberechtigung auf ein rechnerbasiertes Objekt in einem Automatisierungssystem zunächst für ein Steuerungsprogramm ein Identifikator ermittelt und der Identifikator mittels eines einer Steuerungs- und Überwachungseinheit des Automatisierungssystems zugeordneten privaten digitalen Schlüssels verschlüsselt. Dies kann einmalig für das Steuerungsprogramm erfolgen und braucht nicht wiederholt zu werden. Anhand des rechnerbasierten Objekts wird ein erster Dienst und anhand des Steuerungsprogramms wird ein zweiter Dienst des Automatisierungssystems vorzugsweise innerhalb einer dienstorientierten Architektur bereitgestellt. Dienstorientierte bzw. serviceorientierte Architekturen (SOA) zielen darauf ab, Dienste in komplexen Organisationseinheiten zu strukturieren und für eine Vielzahl von Nutzern verfügbar zu machen. Dabei werden beispielsweise vorhandene Komponenten eines Datenverarbeitungssystems, wie Programme, Datenbanken, Server oder Websites, so koordiniert, daß von den Komponenten bereitgestellte Leistungen zu Diensten zusammen gefaßt und berechtigten Nutzern zur Verfügung gestellt werden. Serviceorientierte Architekturen ermöglichen eine Anwendungsintegration, indem Komplexität einzelner Teilkomponenten eines Datenverarbeitungssystems hinter standardisierten Schnittstellen verborgen wird. Hierdurch lassen sich wiederum Zugriffsberechtigungsregelungen vereinfachen.

Rechnerbasierte Objekte sind beispielsweise ohne Beschränkung der Allgemeinheit dieses Begriffs Betriebssysteme, Steuerungs- oder Anwendungsprogramme, durch Betriebssysteme, Steuerungs- oder Anwendungsprogramme bereitgestellte Dienste, Leistungsmerkmale, Funktionen oder Prozeduren, Zugriffsrechte auf Peripheriegeräte sowie auf einem Speichermedium befindliche Daten. Funktionen oder Prozeduren umfassen dabei insbesondere auch eine Freigabe von Zugriffsberechtigungen in einem Automatisierungssystem. Unter einem Rechner sind beispielsweise PCs, Notebooks, Server, PDAs, Mobiltelefone sowie Steuerungs- und Regelungsmodule, Sensoren oder Aktoren in der Automatisierungs-, Fahrzeug-, Kommunikations- oder Medizintechnik zu verstehen - allgemein Einrichtungen, in denen Computerprogramme ablaufen.

Des weiteren wird entsprechend der erfindungsgemäßen Lösung der verschlüsselte Identifikator bei Übermittlung an einen Authentifizierungsdienst entschlüsselt und durch den Authentifizierungsdienst verifiziert. Der Authentifizierungsdienst übermittelt bei erfolgreicher Verifizierung ein zumindest befristet gültiges Token an den zweiten Dienst. Bei einer Anforderung eines Zugriffs auf das rechnerbasierte Objekt wird das Token durch das Steuerungsprogramm an den ersten Dienst zur Überprüfung übermittelt. Bei einem positiven Überprüfungsergebnis wird ein Zugriff auf das rechnerbasierte Objekt für das Steuerungsprogramm eingeräumt, vorzugsweise durch einen Autorisierungsdienst. Die Übermittlung des verschlüsselten Identifikators an den Authentifizierungsdienst kann im Rahmen eines vom zweiten Dienst initiierten Dienstaufrufs erfolgen. In entsprechender Weise kann das Token im Rahmen eines vom zweiten Dienst initiierten Dienstaufrufs an den ersten Dienst übermittelt werden.

Die erfindungsgemäße Lösung bietet den Vorteil, daß Software-Authentifizierungsverfahren für Ressourcen anfordernde bzw. bereitstellende Software-Module konfigurierbar sind und nicht fest in die jeweiligen Software-Module integriert werden müssen. Eine derartige Funktionalität kann somit in Form einer Dienstkomponente genutzt werden und ermöglicht eine schnelle, flexible und wirkungsvolle Nutzung. Entsprechend einer bevorzugten Ausführungsform der vorliegenden Erfindung weist der zweite Dienst hierzu für jedes vom zweiten Dienst umfaßte Steuerungsprogrammodul jeweils eine eigene Dienstkomponente zur Anforderung eines Modulidentifikators, zur Verwaltung eines durch die Steuerungs- und Überwachungseinheit verschlüsselten Modulidentifikators bzw. zur Verwaltung eines aus dem Modulidentifikator durch den Authentifizierungsdienst ermittelten Modultokens auf.

Erfindungsgemäß ist die Steuerungs- und Überwachungseinheit ein Engineering-System zur Konfiguration, Wartung, Inbetriebnahme und/oder Dokumentation des Automatisierungssystems, und der Authentifizierungsdienst wird durch das Engineering-System bereitgestellt. Auf diese Weise lassen sich Software-Authentifizierunqsverfahren in verteilten Automatisierungssystemen, die auf dienstorientierten Architekturen beruhen, besonders schnell, sicher und effizient konfigurieren. Hieräus ergibt sich eine erhebliche Verbesserung von Systemsicherheit und -stabilität.

Die Erfindung wird nachfolgend an einem Ausführungsbeispiel anhand der Zeichnung näher erläutert. Es zeigt
- Figur 1: ein Ablaufdiagramm für ein Verfahren zur Einräumung einer Zugriffsberechtigung auf ein rechnerbasiertes Objekt in einem Automatisierungssystem,
- Figur 2: eine schematische Darstellung eines Automatisierungssystems zur Realisierung des Verfahrens gemäß Figur 1.

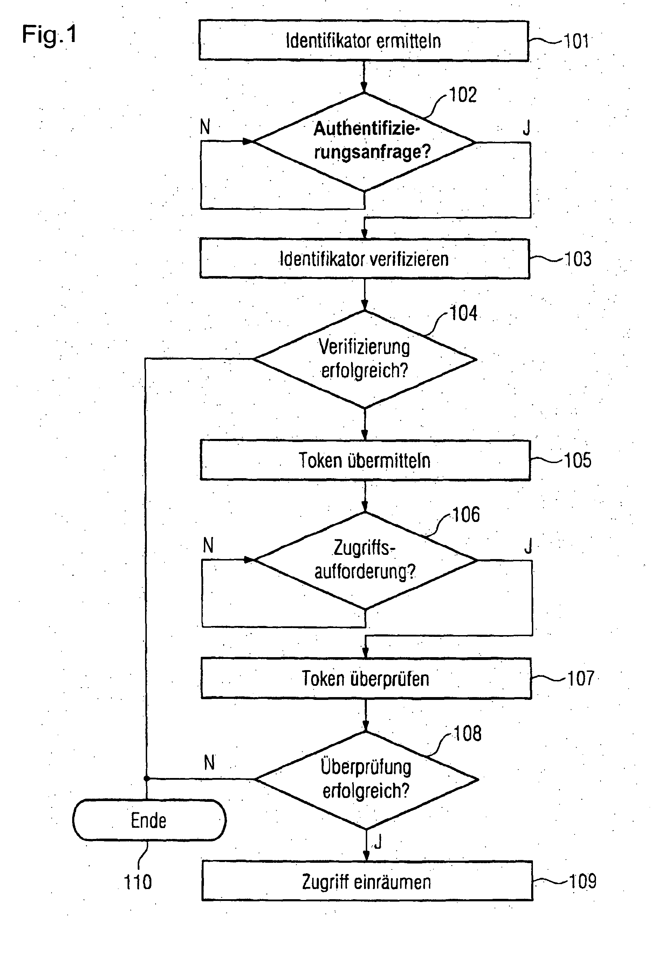

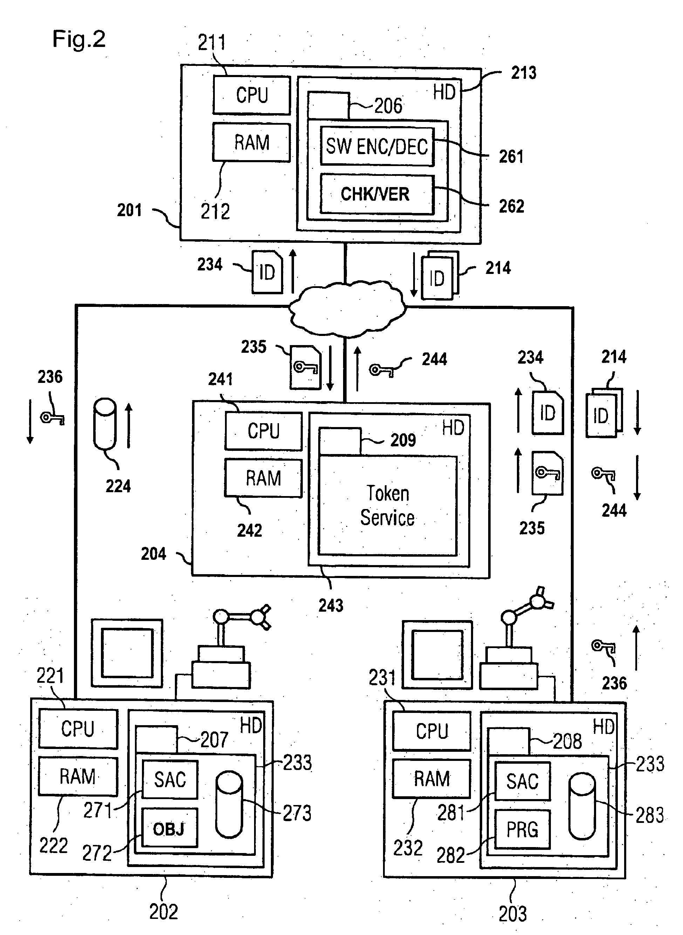

Entsprechend dem in Figur 1 veranschaulichten Verfahren zur Einräumung einer Zugriffsberechtigung auf ein rechnerbasiertes Objekt 272 ermittelt ein Engineering-System 201 des Automatisierungssystems gemäß Figur 2 für ein Steuerungsprogramm 282 einen Software-Identifikator (Schritt 101). Außerdem wird der Software-Identifikator mittels eines dem Engineering-System 201 zugeordneten privaten digitalen Schlüssels verschlüssel. Das Engineering-System 201 ist über ein Kommunikationsnetz 205 mit einer ersten Rechnereinheit 202, einer zweiten Rechnereinheit 203 und einer dritten Rechnereinheit 204 verbunden. Durch die erste Rechnereinheit 202 wird anhand des rechnerbasierten Objekts 272 ein erster Dienst innerhalb einer dienstorientierten Architektur bereitgestellt, während anhand des Steuerungsprogramms 282 ein zweiter Dienst bereitgestellt wird. Auf einer Festplatte 223, 233 der ersten und der zweiten Rechnereinheit 202, 203 ist jeweils Programmcode 207, 208 zur Implementierung des ersten bzw. zweiten Dienstes gespeichert. Der jeweilige Programmcode 207, 208 umfaßt das rechnerbasierte Objekt 272 bzw. das Steuerungsprogramm 282 und ist in einen Arbeitsspeicher 222, 232 der ersten bzw. zweiten Rechnereinheit 202, 203 ladbar. Außerdem ist der jeweilige Programmcode 207, 208 durch einen Prozessor 221, 231 der ersten bzw. zweiten Rechnereinheit 202, 203 zur Bereitstellung des ersten bzw. zweiten Dienstes ausführbar.

Das rechnerbasierte Objekt 272 ist im vorliegenden Ausführungsbeispiel ein Meßergebnis, das durch die erste Rechnereinheit 202 als computergestützte Sensoreinheit erfaßt wird und vom auf der zweiten Rechnereinheit 203 ablaufenden Steuerungsprogramm 282 angefordert wird. Das Steuerungsprogramm dient zur Ansteuerung von meßtechnischer oder aktorischer Peripherie der zweiten Rechnereinheit 203, wie Sensoren oder Roboter. Im Hinblick auf einen Meldungsaustausch zur Steuerung und Überwachung der Rechnereinheiten 202-204 ist sicherzustellen, daß Meldungen auf einem Weg von einem Sender zu einem Empfänger nicht verfälscht werden. Andernfalls könnte dies zu Störungen oder Schäden im Automatisierungssystem führen. Außerdem kann ein Interesse darin bestehen, daß beispielsweise ein infolge eines Ablaufs eines Steuerungsprogramms erfaßtes Meßergebnis nur durch einen berechtigten Benutzer abfragbar ist und eine übermittelte Meldung mit dem Meßergebnis nicht durch unautorisierte Benutzer abgefangen und ausgelesen werden kann. Ein Benutzer kann hierbei auch ein anderes Gerät innerhalb des Automatisierungssystems sein.

Das Engineering-System 201 dient zur Konfiguration, Wartung, Inbetriebnahme und/oder Dokumentation des Automatisierungssystems und stellt einen Identitätsverwaltungsdienst bereit, durch den die Ermittlung des Identifikators und dessen Verschlüsselung erfolgt. Hierzu ist auf einer Festplatte 213 des Engineering-Systems 201 Programmcode 206 zur Implementierung des Identitätsverwaltungsdienstes gespeichert, der in einen Arbeitsspeicher 212 ladbar und durch einen Prozessor 211 des Engineering-Systems 201 ausführbar ist. Der Authentifizierungsdienst umfaßt eine Dienstkomponente für eine Ver- und Entschlüsselung von Software-Identifikatoren und eine Dienstkomponente für eine Verifizierung von Software-Identifikator-Anforderungen. Programmcode 261, 262 zur Implementierung dieser Dienstkomponenten ist ebenfalls auf der Festplatte 213 des Engineering-Systems 201 gespeichert.

Auf einer Festplatte 243 der dritten Rechnereinheit 204 ist Programmcode 209 zur Implementierung eines Token-Dienstes gespeichert, durch den Token zum Zugriff auf rechnerbasierte Objekte für Steuerungsprogramme bereitgestellt werden. Der Programmcode 209 zur Implementierung des Token-Dienstes ist in einen Arbeitsspeicher 242 der dritten Rechnereinheit 204 ladbar und durch einen Prozessor 241 der dritten Rechnereinheit 204 ausführbar.

Der entsprechend Schritt 101 des in Figur 1 dargestellten Ablaufdiagramms ermittelte und verschlüsselte Software-Identifikator wird auf eine von der zweiten Rechnereinheit 203 an das Engineering-System 201 übermittelte Meldung 234 mit einer Anforderung eines verschlüsselten Software-Identifikators durch den Identitätsverwaltungsdienst erstellt. Nach erfolgreicher Verifizierung der Anfrage und Erstellung des verschlüsselten Software-Identifikators 214 wird dieser an die zweite Rechnereinheit 203 übermittelt und dort in einer dem zweiten Dienst zugeordneten Datenbank 283 abgespeichert, die auch Informationen zur Konfiguration des zweiten Dienstes umfaßt. Vorzugsweise wird auch eine unverschlüsselte Version des Software-Identifikators an die zweite Rechnereinheit 203 übermittelt und dort gespeichert.

Nach Erstellung und Übermittlung des verschlüsselten Software-Identifikators an die zweite Rechnereinheit 203 überprüft der Token-Dienst fortlaufend, ob von der zweiten Rechnereinheit 203 eine Authentifizierungsanfrage vorliegt, die eine Meldung 235 mit einer Anforderung eines Tokens für zweiten Dienst zum Zugriff auf das rechnerbasierte Objekt 272 umfaßt (Schritt 102). Eine Meldung 235 mit einer Anforderung eines Tokens umfaßt auch den verschlüsselten Software-Identifikator. Bei Übermittlung einer solchen Meldung an den Token-Dienst wird der verschlüsselte Software-Identifikator durch entsprechende Dienstkomponenten des Token-Dienst entschlüsselt und verifiziert (Schritt 103). Dabei wird insbesondere der entschlüsselte gegen den unverschlüsselten Software-Identifikator abgeglichen, der vorzugsweise von der Meldung 235 mit der Anfrage umfaßt ist. Zwischen Schritt 102 und Schritt 103 kann in praktischen Anwendungsszenarien mitunter eine längere Zeitspanne liegen.

Nachfolgend wird überprüft, ob eine Verifizierung der Anforderung und des verschlüsselten Software-Identifikators erfolgreich verlaufen ist (Schritt 104). Bei negativem Verifizierungsergebnis wird das Verfahren entsprechend Figur 1 im vorliegenden Ausführungsbeispiel beendet (Schritt 110). Ist die Verifizierung dagegen erfolgreich verlaufen, so veranlaßt der Token-Dienst eine Erstellung eines zumindest befristet gültigen Tokens durch den Token-Dienst und eine Übermittlung des Tokens 244 an den zweiten Dienst (Schritt 105). Das Token wird dort in der dem zweiten Dienst zugeordneten Datenbank 283 gespeichert. Vorzugsweise wird der zweite Dienst derart konfiguriert, daß der zweite Dienst bei Ablauf einer Gültigkeitsdauer des Tokens 244 automatisch ein neues Token vom Token-Dienst anfordert.

Entsprechend dem in Figur 1 dargestellten Ablaufdiagramm wird in Schritt 106 fortlaufend durch den ersten Dienst überprüft, ob eine Zugriffsanforderung auf das rechnerbasierte Objekt 272 vorliegt. Liegt eine Zugriffsanforderung 236 mit einem Token durch den zweiten Dienst vor, überprüft der zweite Dienst das Token auf Gültigkeit (Schritt 108). Nachfolgend wird entsprechend Schritt 108 abgefragt, ob eine erfolgreiche Überprüfung vorliegt. Bei einem negativen Überprüfungsergebnis wird das in Figur 1 veranschaulichte Verfahren beendet (Schritt 110). Kann der erste Dienst dagegen für das Token 236 eine erfolgreiche Authentifizierung des Steuerungsprogramms 282 durchführen, wird entsprechend Schritt 109 ein Zugriff auf das rechnerbasierte Objekt 272 durch eine dem ersten Dienst zugeordnete Autorisierungskomponente für das Steuerungsprogramm 282 eingeräumt. Dabei wird im vorliegenden Ausführungsbeispiel eine das rechnerbasierte Objekt 272 umfassende Meldung 224 an die zweite Rechnereinheit 203 übermittelt. Vorzugsweise wird der Zugriff auf das rechnerbasierte Objekt 272 für das Steuerungsprogramm 282 erst dann eingeräumt, wenn der verschlüsselte Software-Identifikator 214 durch das Steuerungsprogramm 282 in den Arbeitsspeicher 232 der zweiten Rechnereinheit 203 geladen ist.

Der zweite Dienst weist für jedes vom zweiten Dienst umfaßte Steuerungsprogrammodul jeweils eine eigene Dienstkomponente zur Anforderung eines Modulidentifikators, zur Verwaltung eines durch die Steuerungs- und Überwachungseinheit verschlüsselten Modulidentifikators und/oder zur Verwaltung eines aus dem Modulidentifikator durch den Token-Dienst ermittelten Modultokens auf. Eine derartige Dienstkomponente implementierender Programmcode 281 ist ebenfalls auf der Festplatte 233 der zweiten Rechnereinheit 203 gespeichert. Für Anwendungsfälle, in denen der erste Dienst auf andere Dienste zurückgreift, ist ebenfalls eine entsprechende Dienstkomponente für den ersten Dienst vorgesehen, deren Programmcode 271 auf der Festplatte 223 der ersten Rechnereinheit gespeichert ist. Etwaige Software-Identifikatoren oder Token werden gemeinsam mit Daten zur Konfiguration des ersten Dienstes in einer der ersten Rechnereinheit 202 zugeordneten Datenbank 283 gespeichert.

Das vorangehend beschriebene Verfahren wird auf Seiten des Engineering-Systems vorzugsweise durch ein in einen Arbeitsspeicher des Engineering-Systems 202 ladbares Computerprogramm implementiert. Das Computerprogramm weist zumindest einen Codeabschnitt auf, bei dessen Ausführung für ein Steuerungsprogramm ein Identifikator ermittelt und der Identifikator mittels eines einer Steuerungs- und Überwachungseinheit des Automatisierungssystems zugeordneten privaten digitalen Schlüssels verschlüsselt wird, wenn das Computerprogramm im Rechner abläuft. Dabei sind anhand des rechnerbasierten Objekts ein erster Dienst und anhand des Steuerungsprogramms ein zweiter Dienst des Automatisierungssystems innerhalb einer dienstorientierten Architektur bereitstellbar. Außerdem wird bei einer Übermittlung des verschlüsselten Identifikators an einen Authentifizierungsdienst dessen Entschlüsselung und Verifizierung durch den Authentifizierungsdienst veranlaßt. Darüber hinaus wird bei einer erfolgreichen Verifizierung eine Übermittlung eines zumindest befristet gültigen Tokens durch den Authentifizierungsdienst an den zweiten Dienst veranlaßt. Dabei ist das Token zur Überprüfung an den ersten Dienst übermittelbar und zur Einräumung eines Zugriffs auf das rechnerbasierte Objekt für das Steuerungsprogramm überprüfbar.

Die Anwendung der vorliegenden Erfindung ist nicht auf das beschriebene Ausführungsbeispiel beschränkt.

## Patentansprüche

1. Verfahren zur Einräumung einer Zugriffsberechtigung auf ein rechnerbasiertes Objekt in einem Automatisierungssystem, bei dem
- für ein Steuerungsprogramm (282) ein Identifikator (214) ermittelt und der Identifikator (214) mittels eines einem Engineering-System (201) zur Konfiguration, Wartung, Inbetriebnahme und/oder Dokumentation des Automatisierungssystems zugeordneten privaten digitalen Schlüssels verschlüsselt wird,
- anhand des rechnerbasierten Objekts (272) ein erster Dienst und anhand des Steuerungsprogramms (282) ein zweiter Dienst des Automatisierungssysteme bereitgestellt werden,
- der verschlüsselte Identifikator (234) bei Übermittlung an einen Authentifizierungsdienst (209) entschlüsselt und durch den Authentifizierungsdienst (209) verifiziert wird,
- der Authentifizierungsdienst (209) bei erfolgreicher Verifizierung ein zumindest befristet gültiges Token (244) an den zweiten Dient übermittelt wird,
- das Token (236) bei einer Anforderung eines Zugriffe auf das rechnerbasierte Objekt (272) durch das Steuerungsprogramm (282) an den ersten Dienst zur Überprüfung übermittelt wird,
- ein Zugriff auf das rechnerbasierta objekt (272) bei einem positiven Überprüfungsergebnis für das Steuerungsprogramm (282) eingeräumt wird,
- der verschlüsselte Identifikator (214) und/oder das Token (244) in einer dem zweiten Dienst zugeordneten Datenbasis (283) gespeichert wird, die Informationen zur Konfiguration des zweiten Dienstes umfaßt,
- der Identifikator (214) für das Steuerungsprogramm (282) durch den zweiten Dienst angefordert und durch einen Identitätsverwaltungsdienst ermittelt wird, der durch das Engineering-System (201) bereitgestellt wird.

2. Verfahren nach Anspruch 1,
bei dem der erste Dienst und der zweite Dienst innerhalb einer dienstorientierten Architektur bereitgestellt werden.

3. Verfahren nach einem der Ansprüche 1 oder 2,
bei dem ein Zugriff auf das rechnerbasierte Objekt bei einem positiven Überprüfungsergebnis durch eine dem ersten Dienst zugeordnete Autorisierungskomponente für das Steuerungsprogramm eingeräumt wird.

4. Verfahren nach einem der Ansprüche 1 bis 3,
bei dem der zweite Dienst derart konfigurierbar ist, daß der zweite Dienst bei Ablauf einer Gültigkeitsdauer des Tokens automatisch ein neues Token vom Authentifizierungsdienst anfordert.

5. Verfahren nach einem der Ansprüche 1 bis 4,
bei dem die Übermittlung des verschlüsselten Identifikators an den Authentifizierungsdienst im Rahmen eines vom zweiten Dienst initiierten Dienstaufrufs erfolgt.

6. Verfahren nach einem der Ansprüche 1 bis 5,
bei dem das Token im Rahmen eines vom zweiten Dienst initiierten Dienstaufrufs an den ersten Dienst übermittelt wird.

7. Verfahren nach einem der Ansprüche 1 bis 6,
bei dem der Zugriff auf das rechnerbasierte Objekt für das steuerungsprogramm erst dann eingeräumt wird, wenn der verschlüsselte Identifikator durch das Steuerungsprogramm in einen Arbeitsspeicher einer Rechnereinheit geladen ist, auf der das Steuerungsprogramm abläuft.

8. Verfahren nach einem der Ansprüche 1 bis 7,
bei dem der zweite Dienst für jedes vom zweiten Dienst umfaßte steuerungsprogrammodul jeweils eine eigene Dienstkomponente zur Anforderung eines Modulidentifikators, zur verwaltung eines durch das Engineering-System verschlüsselten Modulidentifikators und/oder zur Verwaltung eines aus dem Modulidentifikator durch den Authentifizierungsdienst ermittelten Modultokens aufweist.

9. Computerprogramm zur Einräumung einer Zugriffsberechtigung, das in einen Arbeitsspeicher eines Rechners ladbar ist und zumindest einen Codeabschnitt aufweist, bei dessen Ausführung
- für ein Steuerungsprogramm ein durch einen zweiten Dienst angeforderter Identifikator ermittelt und der Identifikator mittels eines einem Engineering-System zur Konfiguration, Wartung, Inbetriebnahme und/oder Dokumentation des Automatisierungssystems zugeordneten privaten digitalen Schlüssels verschlüsselt wird, wobei anhand des rechnerbasierten Objekts ein erster Dienst und anhand des Steuerungsprogramms der zweite Dienst des Automatisierungssystems bereitstellbar sind, und wobei der Identifikator durch einen Identitätsverwaltungsdienst ermittelt wird, der durch das Engineering-System bereitgestellt wird,
- bei einer Übermittlung des verschlüsselten Identifikators an einen Authentifizierungsdienst dessen Entschlüsselung und Verifizierung durch den Authentifizierungsdienst veranlaßt wird,
- bei einer erfolgreichen Verifizierung eine Übermittlung eines zumindest befristet gültigen Tokens durch den Authentifizierungsdienst an den zweiten Dienst veranlaßt wird, Wobei das Token zur Überprüfung an den ersten Dienst übermittelbar und zur Einräumung eines Zugriffs auf das rechnerbasierte Objekt für das Steuerungsprogramm überprüfbar ist,
- eine Speicherung des verschlüsselten Identifikators und/oder des Token in einer dem zweiten Dienst zugeordneten Datenbasis veranlaßt wird, die Informationen zur Konfiguration des zweiten Dienstes umfaßt,
wenn das Computerprogramm im Rechner abläuft.

## Claims

1. Method for granting access authorization for a computer-based object in an automation system, in which
- an identifier (214) is ascertained for a control program (282) and the identifier (214) is encrypted using a private digital key associated with an engineering system (201) for configuring, servicing, starting up and/or documenting the automation system,
- the computer-based object (272) is used to provide a first service, and the control program (282) is used to provide a second service, from the automation system,
- the encrypted identifier (234) is decrypted upon transmission to an authentication service (209) and is verified by the authentication service (209),
- the authentication service (209) transmits a token (244) having at least fixed-term validity to the second service if verification is successful,
- the token (236) is transmitted via the control program (282) to the first service for checking when access to the computer-based object (272) is requested,
- access to the computer-based object (272) is granted to the control program (282) if the result of the check is positive,
- the encrypted identifier (214) and/or the token (244) is/are stored in a database (283) associated with the second service which database (283) comprises information for configuring the second service,
- the identifier (214) for the control program (282) is requested by the second service and is ascertained by an identity management service, which is provided by the engineering system (201).

2. Method according to Claim 1,
in which the first service and the second service are provided within a service-oriented architecture.

3. Method according to either of Claims 1 and 2,
in which access to the computer-based object is granted to the control program by an authorization component associated with the first service if the result of the check is positive.

4. Method according to one of Claims 1 to 3,
in which the second service can be configured such that the second service automatically requests a new token from the authentication service when a validity period for the token expires.

5. Method according to one of Claims 1 to 4,
in which the encrypted identifier is transmitted to the authentication service as part of a service call initiated by the second service.

6. Method according to one of Claims 1 to 5,
in which the token is transmitted to the first service as part of a service call initiated by the second service.

7. Method according to one of Claims 1 to 6,
in which the access to the computer-based object is granted to the control program only when the encrypted identifier has been loaded by the control program into a main memory in a computer unit on which the control program is running.

8. Method according to one of Claims 1 to 7,
in which the second service has, for each control program module which the second service comprises, a respective dedicated service component for requesting a module identifier, for managing a module identifier encrypted by the engineering system and/or for managing a module token ascertained by the authentication service from the module identifier.

9. Computer program for granting access authorization which can be loaded into a main memory in a computer and has at least one code section, the execution of which prompts
- an identifier requested by a second service to be ascertained for a control program and the identifier to be encrypted using a private digital key associated with an engineering system for configuring, servicing, starting up and/or documenting the automation system, wherein the computer-based object can be used to provide a first service, and the control program can be used to provide the second service, from the automation system, and wherein the identifier is ascertained by an identity management service, which is provided by the engineering system,
- the encrypted identifier to be decrypted upon transmission thereof to an authentication service and to be verified by the authentication service,
- a token with at least fixed-term validity to be transmitted to the second service by the authentication service if verification is successful, wherein the token can be transmitted to the first service for checking and can be checked in order to grant access to the computer-based object to the control program,
- storage of the encrypted identifier and/or the token in a database associated with the second service is prompted, which database comprises information for configuring the second service,
when the computer program is running in the computer.

## Revendications

1. Procédé de concession d'une autorisation d'accès à un objet informatique dans un système d'automatisation, dans lequel
- on détermine pour un programme ( 282 ) de commande un identificateur ( 214 ) et on chiffre l'identificateur ( 214 ) au moyen d'une clé numérique privée affectée à un système ( 201 ) d'ingénierie pour la configuration, l'entretien, la mise en service et/ou la documentation du système d'automatisation,
- au moyen de l'objet ( 272 ) informatique, on met à disposition un premier service et au moyen du programme ( 282 ) de commande un deuxième service du système d'automatisation,
- on déchiffre l'identificateur ( 234 ) chiffré lors de la transmission à un service ( 209 ) d'authentification et on le vérifie par le service ( 209 ) d'authentification,
- on transmet au deuxième service le service ( 209 ) d'authentification lorsqu'on a vérifié avec succès un jeton ( 244 ) valable au moins pour une durée déterminée,
- on transmet pour contrôle au premier service le jeton ( 236 ) lors d'une demande d'un accès à l'objet ( 272 ) informatique par le programme ( 282 ) de commande,
- on concède au programme ( 282 ) de commande un accès à l'objet ( 272 ) informatique si le résultat du contrôle est positif,
- on mémorise l'identificateur ( 214 ) chiffré et/ou le jeton ( 244 ) dans une base ( 283 ) de données associée au deuxième service et comprenant les informations pour la configuration du deuxième service,
- l'identificateur ( 214 ) du programme ( 282 ) de commande est demandé par le deuxième service et est déterminé par un service de gestion d'identité qui est mis à disposition par le système ( 201 ) d'ingénierie.

2. Procédé suivant la revendication 1,
dans lequel on met à dispositif le premier service et le deuxième service au sein d'une architecture service.

3. Procédé suivant l'une des revendications 1 ou 2,
dans lequel un accès à l'objet informatique est, si le résultat du contrôle est positif, concédé au programme de commande par un composant d'autorisation associé au premier service.

4. Procédé suivant l'une des revendications 1 à 3,
dans lequel le deuxième service peut être configuré de manière à ce que le deuxième service demande, lorsqu'une durée de validité du jeton est écoulé, automatiquement un jeton au service d'authentification.

5. Procédé suivant l'une des revendications 1 à 4,
dans lequel la transmission de l'identificateur chiffrée au service d'authentification s'effectue dans le cadre d'un appel de service lancé par le deuxième service.

6. Procédé suivant l'une des revendications 1 à 5,
dans lequel le jeton est transmis au premier service dans le cadre d'un appel de service lancé par le deuxième service.

7. Procédé suivant l'une des revendications 1 à 6,
dans lequel l'accès du programme de commande à l'objet informatique n'est concédé que si l'identificateur chiffré est chargé par le programme de commande dans une mémoire de travail d'une unité informatique sur laquelle se déroule le programme de commande.

8. Procédé suivant l'une des revendications 1 à 7,
dans lequel le deuxième service a, pour chaque module de programme de commande compris par le deuxième service, respectivement un composant de service propre pour demander à l'identificateur de module pour gérer un identificateur de module chiffré par le système d'ingénierie et/ou pour gérer un jeton de module déterminé par le service d'authentification à partir de l'identificateur de module.

9. Programme d'ordinateur pour concéder une autorisation d'accès, qui peut être chargé dans une mémoire de travail d'un ordinateur et qui a au moins une partie de code dont l'exécution
- pour un programme de commande détermine un identificateur demandé par un deuxième service et l'identificateur est chiffré au moyen d'une clé numérique privée affectée à un système d'ingénierie pour la configuration, l'entretien, la mise en service et/ou la documentation du système d'automatisation, dans lequel au moyen de l'objet informatique un premier service et au moyen du programme de commande le deuxième service du système d'automatisation peuvent être mis à disposition et dans lequel l'identificateur est déterminé par un service de gestion d'identité qui est mis à disposition par le système d'ingénierie,
- lors d'une transmission d'identificateur chiffrée au service d'authentification son déchiffrement et sa vérification sont provoqués par le service d'authentification
- lors d'une vérification couronnée de succès, une transmission au deuxième service d'un jeton valable pendant au moins une certaine durée est provoquée par le service d'authentification, le jeton pouvant être contrôlé pour la concession au programme de commande d'un accès à l'objet informatique,
- il est provoqué une mémorisation de l'identificateur chiffré et/ou de jeton dans une base de données qui est associée au deuxième service et qui comprend des informations de configuration du deuxième service,
lorsque le programme d'ordinateur se déroule dans l'ordinateur.
